# EUROPÄISCHE PATENTSCHRIFT

(11) **EP 3 635 362 B1**
(45) Veröffentlichungstag und Bekanntmachung des Hinweises auf die Patenterteilung: **30.04.2025**
(21) Anmeldenummer: 18736786.7
(22) Anmeldetag: 05.06.2018
(51) Int. Cl.: G01N 1/28, C04B 35/626, G01N 1/44

(54) **HERSTELLUNG VON NANOPARTIKULÄREN PRESSTABLETTEN/PELLETS, MIT DEM VERFAHREN HERGESTELLTE PRESSTABLETTEN/PELLETS UND VERWENDUNG HIERVON**
PRODUCTION OF NANOPARTICULATE COMPRESSED TABLETS/PELLETS, COMPRESSED TABLETS/PELLETS PRODUCED BY THE PROCESS AND USE THEREOF
PRODUCTION DE COMPRIMÉS/PELLETS NANOPARTICULAIRES, COMPRIMÉS/PELLETS OBTENUS PAR CE PROCÉDÉ ET UTILISATION DE CES COMPRIMÉS/PELLETS

(30) Priorität: 08.06.2017 DE 102017112691
(43) Veröffentlichungstag der Anmeldung: 15.04.2020
(73) Patentinhaber: Christian-Albrechts-Universität zu Kiel, 24118 Kiel (DE)
(72) Erfinder: GARBE-SCHÖNBERG, Carl-Dieter, 24239 Achterwehr (DE); MÜLLER, Samuel, 24118 Kiel (DE); NORDSTAD, Simon, 24106 Kiel (DE)
(86) Internationale Anmeldenummer: PCT/DE2018/100533
(87) Internationale Veröffentlichungsnummer: WO 2018/224092

(56) Entgegenhaltungen:
- EP-A1- 1 621 526
- WO-A1-2006/024098
- WO-A2-2004/077521
- US-A1- 2008 135 798
- AURÉLIE CARDIN: "High throughput method for the development of bulk lead free piezoelectric ceramics", 24 June 2009 (2009-06-24), XP055509903, Retrieved from the Internet <URL:https://scidok.sulb.uni-saarland.de/bitstream/20.500.11880/22639/1/dissACardin_210609.pdf> [retrieved on 20180925], DOI: 10.22028/D291-22583
- DIETER GARBE-SCHÖNBERG ET AL: "Nano-particulate pressed powder tablets for LA-ICP-MS", JOURNAL OF ANALYTICAL ATOMIC SPECTROMETRY, vol. 29, no. 6, 1 January 2014 (2014-01-01), pages 990 - 1000, XP055509904, ISSN: 0267-9477, DOI: 10.1039/C4JA00007B

## Beschreibung

Die Erfindung betrifft ein Presstabletten/Pellets-Herstellungsverfahren nanopartikulärer Presstabletten / Pellets aus synthetischen und/oder natürlichen Materialien umfassend die Schritte:
- Herstellen eines analysefein gemahlenen Pulvers mit Korngröße < 75 µm und
- Verpressen wenigstens eines Aliquots davon in einer Hochdruckpresse zu einer Tablette / Pellets.

Ferner betrifft die Erfindung eine Presstablette bzw. ein Pellet sowie Verwendungen davon.

Neben mobilen Röntgenscannern werden Mikroanalyseverfahren für Element-Konzentrationsbestimmungen direkt an Feststoffen immer universeller einsetzbar und sind weitverbreitet, z.B. in der Forschung, für die Qualitätssicherung von Materialien oder zur Exploration im Bergbau.

Es gibt allerdings kaum als Standards geeignetes Material mit ausreichender Homogenität, um damit die entsprechenden Analyseverfahren kalibrieren und Messergebnisse absichern zu können.

Im Mikrometermaßstab homogene natürliche Materialien, wie z.B. Kristalle, sind extrem selten bzw. sehr schwer herstellbar. Homogene synthetische Gläser lassen sich nur schwer und nicht von allen Stoffen herstellen. Presstabletten aus Pulvern, nachfolgend auch Pellets genannt, waren bisher zu grobkörnig für Mikroanalysen und enthielten meistens ein Bindemittel.

Aus dem Stand der Technik ist ein Herstellungsverfahren für entsprechende Pellets bekannt, das der Druckschrift / Veröffentlichung "Nano-particulate pressed powder tablets for LA-ICP-MS" von D. Garbe-Schönberg und S. Müller veröffentlicht am 16. April 2014 in The Royal Society of Chemistry, J. Anal. At. Spectrom., 2014, 29, 990. Der Stand der Technik aus dieser Publikation wird explizit mit in diese Druckschrift mit einbezogen.

Die Dissertation von Aurélie Cardin: "High Throughput Method for the Development of Bulk Lead Free Piezoelectric Ceramics", Saarbrücken 2009 beschreibt ein Verfahren zur Herstellung und Test von piezoelektrischen Keramiken in Form von gesinterten Pellets, wobei hier der Schwerpunkt auf der Optimierung des Zeitbedarfs für die Herstellung der Testpellets liegt. Die Pellets werden gesintert, die Korngröße der Partikel in den Pellets liegt bei 5 µm nach dem Sintern.

Nachfolgend werden kurz die Probleme des Standes der Technik aufgeführt, die diesseits bearbeitet werden und die mit der diesseitigen Offenbarung gelöst werden, nämlich:
- Problem der Analytischen Chemie:
   Zur Kalibrierung und Validierung von Mikroanalysen direkt an Feststoffen werden Standardreferenzmaterialien (SRM) benötigt, die in ihren Eigenschaften möglichst ähnlich zu denen der unbekannten Proben sein sollen (matrix matching).

Diese SRM müssen an jeder Stelle so homogen sein, dass Mikroanalysen mit z.B. 1µm bis 100µm Ortsauflösung immer das gleiche Ergebnis innerhalb eines vorgegebenen Vertrauensbereiches ergeben, und das gilt auch für Spuren- und Ultraspurenelemente, wobei es aber extrem schwer, teuer und aufwendig ist, so homogene Materialien in der Natur zu finden oder technisch herzustellen.

Verwendung als SRM finden bisher natürliche oder synthetische Gläser, natürliche oder synthetische Minerale, Metalle bzw. Metall-Legierungen, Pulverpresstabletten aus natürlichen oder synthetischen Stoffen bzw. Stoffgemischen.
- Glas:
   Viele Materialien lassen sich nicht schmelzen und zu einem homogenen Glas verarbeiten. Beim Schmelzen gehen flüchtige Stoffe aus dem Originalmaterial verloren. Gläser haben andere Eigenschaften als z.B. kristalline Materialien. Es gibt nur sehr wenige natürliche homogene Gläser.
- Metalle:
   Durch Diffusion innerhalb des Metalls entsteht bei der Herstellung Heterogenität.
- Minerale:
   Über größere Bereiche (mm-cm Maßstab) ausreichend homogene und in benötigten größeren Mengen (>300-500g) vorkommende natürliche Minerale sind sehr selten.

Bei der Herstellung / Züchtung synthetischer Minerale entsteht Heterogenität und es ist sehr schwer, Kristalle herzustellen, die über größere Bereiche die notwendige Homogenität aufweisen.
- Pulverpresstabletten:
   Haltbare Presstabletten aus Pulvern waren bisher oft nur mit Zusatz von Bindern herstellbar.

Die Korngrößen der Partikel im Bereich 10-100 µm von "normalem" analysenfein gemahlenem Pulver sind viel zu grob und damit ungeeignet für Mikroanalysen mit Ortsauflösung von 1-100 µm. Presslinge aus Nanopartikeln, die nach dem bottom-up (SdT) Prinzip hergestellt wurden, sind extrem teuer, die stoffliche Anpassung an natürliche Materialien mit komplexer Zusammensetzung (50+ Elemente) ist kaum möglich.

Aufgabe der Erfindung ist es, neue Möglichkeiten zur Herstellung homogener Standards für eine Vielzahl von Materialien aufzuzeigen.

Es sollen Presstabletten / Pellets aus synthetischen oder natürlichen Materialien nach einem neu entwickelten Mahl- und Pressverfahren hergestellt werden.

Gelöst werden diese Aufgaben mit den entsprechenden Merkmalskombinationen gemäß Hauptanspruch sowie gemäß den nebengeordneten Ansprüchen.

Das Presstabletten/Pellets-Herstellungsverfahren nanopartikulärer Presstabletten / Pellets aus synthetischen und/oder natürlichen Materialien umfasst die Schritte:
- Herstellen eines analysefein gemahlenen Pulvers mit Korngröße <75 µm und
- Verpressen wenigstens eines Aliquots davon in einer Hochdruckpresse zu einer Tablette / Pellets,
   wobei zwischen den zuvor genannten Schritten
- zunächst eine Nassvermahlung des analysefein gemahlenen Pulvers in einer Mahlanordnung, Jet-Mill-Mahlanordnung und / oder Hochenergie-Kugelmühlenmahlanordnung zu einem Mahlgut erfolgt;
- im Weiteren ein Überführen und Trocknen, thermisches Trocknen oder Gefriertrocknen des Mahlgutes zu einem Nanopulver erfolgt
   und
- anschließend ein Rehomogenisieren des getrockneten Nanopulvers erfolgt, wobei
- das wenigstens eine Aliquot zum Verpressen von dem getrockneten und rehomogenisierten Nanopulver ausgewählt wird,
- das Verpressen ohne Zusatz eines Bindemittels erfolgt, und
- ein Nanopulver mit Korngrößen im Bereich von 30-150 nm gebildet wird.

Mit dem diesseitigen "top-down"-Prinzip werden Nanopartikel erzeugt, die sich ohne weitere Bindemittel zu stabilen Tabletten pressen lassen.

Die sehr geringen Partikelgrößen gewährleisten hierbei eine exzellente Homogenität bis in den Mikrometerbereich.

Geringe Porosität und ausgezeichnete Oberflächengüte der Tabletten erlauben deren Vermessung auch mit Elektronen- oder Ionenstrahl-Messverfahren im Hochvakuum.

Die nano-Tabletten bieten auch für Messungen mit Röntgenfluoreszenz (Röntgenscanner) bessere Eigenschaften als bisher eingesetzte Pulverpresslinge. Hierdurch erweisen sich die Tabletten als neues universelles Material, das mit vielen verschiedenen Mikro-Analyseverfahren untersucht werden kann und daher großes Potenzial für die Eignung als zertifizierbares Standard-Referenzmaterial hat, und zwar sowohl für Element - als auch für Isotopenzusammensetzung.

Das diesseitige Herstellungsverfahren beinhaltet eine Ultra-Feinmahlung, auch unter dem Begriff "top-down"-Prinzip ausgeführt, zu Nanopartikeln, gefolgt von einer Gefriertrocknung, und dem Verpressen des Nanopulvers insbesondere mit Saphirscheiben in einer bevorzugt programmierbaren Hochdruckpresse.

Eine optionale und bevorzugte Verstärkung der Tabletten äußerlich (Rand, Rückseite) mit Presshilfen wie z.B. Zellulose, Borsäure (Sandwich) ist möglich und sinnvoll.

Das diesseitige Verfahren ermöglicht die Herstellung von stabilen Presstabletten (Presslingen) aus synthetischen und/oder natürlichen Materialien, die in Nanopartikel überführt werden, entsprechend des top-down-Prinzips, wodurch auch sehr komplex zusammengesetzte Materialien überführbar werden.

Die extrem geringe Partikelgröße ermöglicht hierbei eine sehr gute Homogenisierung von Stoffen/ Stoffgemischen (10-100 µm Maßstab).

Gegenüber dem Stand der Technik, beispielsweise aus Garbe-Schönberg und Müller, 2014 (s. Einleitung zum SdT) wiedergegebenen Stand ist das diesseitige Verfahren durch kontinuierliche Verbesserung des Standes der Technik heute um zwei Größenordnungen besser in der Partikelgröße und Oberflächengüte der Tabletten.

Wesentliche Änderungen zum Stand der Technik bestehen in der Art der eingesetzten Mühle, des Mahlprotokolls, und in einer grundlegenden Änderung des Pressvorgangs bei der Tablettenherstellung.

Das Verpressen des Aliquots erfolgt bevorzugt in einer Hochdruckpresse im Arbeitsbereich von2 bis 80t, 3 bis 40t, oder 5 - 20t.

Weiter kann bevorzugt das Verpressen in der Hochdruckpresse mit polierten Saphir-, Glas- und / oder Diamantscheiben und an den Einsatzbereich angepassten Formfaktoren durch Presswerkzeuge erfolgen.

Zur Vermeidung von Kontamination der Tablettenoberfläche durch den metallischen PressStempel und zum Erzielen einer sehr glatten und ebenen Oberfläche kann zwischen Pulver und Pressstempel eine Saphirscheibe gelegt werden.

Insbesondere kann die Nassvermahlung mit einer Flüssigkeit erfolgen, wobei die Flüssigkeit Wasser, de-ionisiertem Wasser und / oder ein organisches Lösungsmittel sein kann.

Hinsichtlich der Mahlprotokolle sind die wesentlichen Parameter, die sich in Abhängigkeit vom Material ändern, die Wassermenge und die Mahldauer, wobei weitere Parameter wie Umdrehungszahl (Beschleunigung) etc. noch zusätzlich variiert werden können. Exemplarisch sind die nachfolgenden Mahlprotokolle für geologische / Umwelt-Materialien aufgeführt:

| | | |
|---|---|---|
| - Erze, Flugaschen: | 30 min, | 10 ml D.I.Wasser |
| - Basalt (mafische Gesteine): | 45 min, | 5 ml D.I.Wasser |
| - Karbonat/Phosphat: | 15 min, | 10 ml D.I.Wasser |
| - Granit u.Ä: | 60 min, | 5 ml D.I.Wasser |
| - Ultramafische Gesteine: | 45 min, | 5ml D.I.Wasser |

Die Presstabletten / Pellets, hergestellt mit einem der vorangehend aufgezeigten Presstabletten/Pellets-Herstellungsverfahren nanopartikulärer Presstabletten / Pellets aus synthetischen und/oder natürlichen Materialien, sind ebenso schützenswert.

Ferner ist noch die Verwendung der vorangegangenen Presstabletten / Pellets, hergestellt mit einem der vorangehenden Presstabletten/Pellets-Herstellungsverfahren nanopartikulärer Presstabletten / Pellets aus synthetischen und/oder natürlichen Materialien als, insbesondere nach ISO Richtlinien zertifiziertes, Referenzmaterial für Feststoff-Analyseverfahren besonders vorteilhaft.

Weiter können die vorangegangenen Presstabletten / Pellets, hergestellt mit einem der vorangehenden Presstabletten/Pellets-Herstellungsverfahren nanopartikulärer Presstabletten / Pellets aus synthetischen und/oder natürlichen Materialien als Medium für die direkte Feststoffanalytik verwendet werden.

Die Perspektive dieser Entwicklung ist, dass in Zukunft kein Nasslabor für den Aufschluss von Feststoffen mehr benötigt wird, da diese Art von Nasslaboren mit erheblichem Aufwand für Reinheit und großen Risiken durch Gefahrstoffe verbunden sind.

Insgesamt ergeben sich die nachfolgenden Vorteile:
- um mechanisch stabile Tabletten aus unverdünntem Originalpulver herzustellen ist wegen der sehr hohen Kohäsion der Nanopartikel kein Zusatz von Bindemittel mehr nötig, weshalb daher keine Verdünnung / stoffliche Veränderung des Originalmaterials erfolgt;
- durch die extrem kleine Korngröße der Nanopartikel < 100 nm besteht eine sehr geringe Heterogenität bei Analysen mit Ortsauflösung im Bereich von 1-100 µm;
- es ist die ideale Möglichkeit, natürliche oder synthetische Materialien zu homogenisieren;
- die Mischung und Homogenisierung unterschiedlicher Feststoffe ist möglich;
- die Stabilität im Hochvakuum und unter hochenergetischen Strahlen (Elektronenstrahl, Ionenstrahl) ist gegeben;
- die Oberfläche ist extrem eben und glatt (Rauigkeit < 30-150 nm); Presslinge sind ultrahomogen, stabil und weisen eine extrem glatte und ebene Oberfläche auf;
- extrem homogene Festkörper, auch hergestellt nach ISO und REMCO Richtlinien, geeignet als zertifizierte Standardreferenzmaterialien (SRM) für eine Vielzahl von Materialien für Element- und Isotopenzusammensetzung;
- begegnet dem weltweit extremen Mangel an homogenen Festkörpern, die als Mikro-SRM genutzt werden können;
- ist geeignet für viele Mikro-Analysenverfahren mit Röntgen-, Laser-, Elektronen- und Ionenstrahlen, das sehr große Problem des weltweiten Fehlens homogener SRM wird dadurch gelöst;
- in sich geschlossenes Analyse-Verfahren zur Elementanalyse von Feststoffen auf Hauptbis Ultraspurenelementzusammensetzung sind möglich, wobei dadurch Nasslabore mit Gefahrstoffen wegfallen können;
- Verzicht auf Zusatz von Mahl- oder Presshilfen;
- homogene Mischung von verschiedenen Materialien als Nanopulver ohne Phasentrennung.

Nachfolgend wird ein Ausführungsbeispiel der Erfindung anhand der beiliegenden Zeichnungen in der Figurenbeschreibung detailliert beschrieben, wobei diese die Erfindung erläutern soll und nicht beschränkend zu werten sind. Zudem wird der Stand der Technik erläutert.

Es zeigen:
- Fig. 1: eine schematische Darstellung eines Ausführungsbeispiels des im Stande der Technik bekannten Herstellungsverfahrens und
- Fig. 2: eine schematische Darstellung eines Ausführungsbeispiels des hier offenbarten Herstellungsverfahrens.

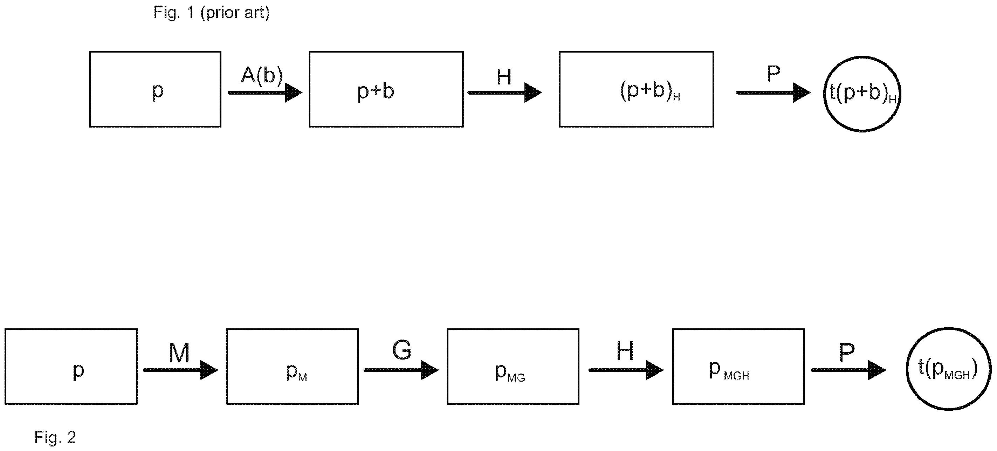

In Fig. 1 ist eine schematische Darstellung eines Ausführungsbeispiels des im Stande der Technik bekannten Herstellungsverfahrens dargestellt.

Hierbei wird zunächst das Ausgangsmaterial p analysefein gemahlen ( <75 µm) und im Anschluss mit einem Binder b, bspw. Zellulose, Wachs, Borsäure, organische Verbindungen, etc. vermischt A(b) und homogenisiert H. Im Anschluss wird ein Aliquot davon (p+b)_{H} in einer hydraulischen Hochdruckpresse mit 5 bis 20 t zu einer Tablette / Pellet t(p+b)_{H} gepresst P.

Fig. 2 zeigt eine schematische Darstellung eines Ausführungsbeispiels des hier offenbarten Herstellungsverfahrens.

In einem ersten Schritt werden 3-4 g analysenfein gemahlenes Pulver p des Originalmaterials in einem Mahlbecher, beispielsweise aus Achat, unter einer sogenannten Clean Bench in partikelfreier Atmosphäre eingewogen.

Der Mahlbecher enthält bereits eine bestimmte Menge an Mahlkugeln aus Achat, wobei sich Durchmesser und Gesamtmasse der Mahlkugeln nach dem Material (Mahlprotokoll) richten.

Mahlkugeln und -becher waren vorher durch Mahlen von hochreinem (optische Qualität) Quarzpulver gereinigt worden. Es erfolgt noch eine Zugabe von de-ionisiertem Wasser (DIW, > 18,2 MOhm), wobei die Menge sich nach dem zu mahlendem Material (Mahlprotokoll) richtet und erfolgt derart, dass während des Mahlens eine Suspension mit Öl-artiger Viskosität entsteht. Anschließend erfolgt ein Verschließen des Mahlbechers und Einsetzen in eine Kugelmühle.

Im Anschluss erfolgt eine Nassvermahlung M in einer Hochenergie-Kugelmühle im Intervallbetrieb.

Die Mahldauer ist materialspezifisch und wurde für eine Reihe von Materialien optimiert (Mahlprotokoll). Dabei entstehen Partikel mit Korngrößen im Nanometerbereich (30-150 nm).

Das fertig gemahlene Nanopulver p_{M} wird als Suspension mit DIW von den Kugeln und vom Mahlbecher gespült und mit einer Pipette in einen vorgereinigten Plastikbecher überführt. Der Plastikbecher mit der Suspension (ca. 50-100 ml) wird bei -80°C schockgefroren und dann in einer Gefriertrocknungsanlage G über 72-96 h getrocknet.

Das getrocknete Nanopulver p_{MG} wird in einen Hand-Mörser aus Achat überführt und rehomogenisiert H.

Das rehomogenisierte Nanopulver p_{MGH} wird in das Presswerkzeug eingewogen (ca. 600 mg für eine Tablette mit 13 mm Durchmesser), dieses dann in eine programmierbare hydraulische Tablettenpresse eingesetzt und im Weiteren wird das Pulver dann mit 10 t/cm2 (für 13 mm Durchmesser; Pressprotokoll) über 1 Minute verpresst P.

Zur Vermeidung von Kontamination der Tablettenoberfläche durch den metallischen PressStempel und zum Erzielen einer sehr glatten und ebenen Oberfläche wird zwischen Pulver p_{MG} und Pressstempel eine Saphirscheibe gelegt. Je nach analytischer Anwendung werden Tabletten t(p_{MGH}) mit verschiedenen Durchmessern (z.B. 5, 10, 13, 32 mm) hergestellt.

### Bezugszeichenliste

- A: Zugabe eines Binders b
- b: Binder
- G: Gefriertrocknen
- H: Rehomogenisieren
- M: Mahlvorgang / Nassvermahlung
- P: Verpressen
- p: Pulver, analysefein gemahlen
- p_{M}: Pulver, gemahlen
- p_{MG}: Nanopulver / Pulver, gemahlen und gefriergetrocknet
- p_{MGH}: homogenisiertes Nanopulver / Pulver, gemahlen, gefriergetrocknet und rehomogenisiert
- p+b: Pulver mit Binder
- (p+b)_{H}: Pulver mit Binder, homogenisiert
- t: Pellet, Tablette

## Patentansprüche

1. Presstabletten/Pellets-Herstellungsverfahren nanopartikulärer Presstabletten / Pellets aus synthetischen und/oder natürlichen Materialien mit den Schritten:
- Herstellen eines analysefein gemahlenen Pulvers (p) mit Korngröße <75 µm
und
- Verpressen (P) wenigstens eines Aliquots davon in einer Hochdruckpresse zu einer Tablette / Pellets (t), wobei zwischen den zuvor genannten Schritten:
- zunächst eine Nassvermahlung (M) des analysefein gemahlenen Pulvers (p) in einer Mahlanordnung, Jet-Mill-Mahlanordnung und / oder Hochenergie-Kugelmühlenmahlanordnung zu einem Mahlgut (p_{M}) erfolgt;
- im Weiteren ein Überführen und Trocknen, thermisches Trocknen oder Gefriertrocknen (G) des Mahlgutes (p_{M}) zu einem Nanopulver (p_{MG}) erfolgt
und
- anschließend ein Rehomogenisieren (R) des getrockneten Nanopulvers (P_{MGR}) erfolgt, wobei
- das wenigstens eine Aliquot zum Verpressen von dem getrockneten und rehomogenisierten Nanopulver (P_{MGR}) ausgewählt wird,
- das Verpressen ohne Zusatz eines Bindemittels erfolgt, und
- ein Nanopulver (p_{MG}) mit Korngrößen im Bereich von 30-150 nm gebildet wird.

2. Presstabletten/Pellets-Herstellungsverfahren nanopartikulärer Presstabletten / Pellets nach Anspruch 1,
**dadurch gekennzeichnet, dass**
das Verpressen (P) des Aliquots (P_{MGR}) in einer Hochdruckpresse im Arbeitsbereich von 2 3 bis 80t, 3 bis 40t, oder 5 - 20t erfolgt.

3. Presstabletten/Pellets-Herstellungsverfahren nanopartikulärer Presstabletten / Pellets nach Anspruch 2,
**dadurch gekennzeichnet, dass**
Verpressen (P) in der Hochdruckpresse mit polierten Saphir-, Glas- und / oder Diamantscheiben und an den Einsatzbereich angepassten Formfaktoren durch Presswerkzeuge erfolgt.

4. Presstabletten/Pellets-Herstellungsverfahren nanopartikulärer Presstabletten / Pellets nach einem der vorangehenden Ansprüche,
**dadurch gekennzeichnet, dass**
die Nassvermahlung (M) mit einer Flüssigkeit erfolgt, wobei die Flüssigkeit Wasser und / oder ein organisches Lösungsmittel ist.

5. Presstabletten / Pellets hergestellt mit einem der vorangehenden Presstabletten/Pellets-Herstellungsverfahren nanopartikulärer Presstabletten / Pellets aus synthetischen und/oder natürlichen Materialien.

6. Verwendung der vorangegangenen Presstabletten / Pellets hergestellt mit einem der vorangehenden Presstabletten/Pellets-Herstellungsverfahren nanopartikulärer Presstabletten / Pellets aus synthetischen und/oder natürlichen Materialien als Referenzmaterial für Feststoff-Analyseverfahren oder als Medium für die direkte Feststoffanalytik.

## Claims

1. Compressed tablet/pellet producing method for nanoparticulate compressed tablets/pellets from synthetic and/or natural materials comprising the steps of:
- producing a fine-ground powder (p) with grain size <75 µm
and
- pressing (P) at least an aliquot thereof into a tablet/pellet (t) in a high pressure press, wherein
between the above-mentioned steps:
- first a wet grinding (M) of fine-ground powder (p) is carried out in a grinding arrangement, jetmill grinding arrangement and/or high-energy ball mill grinding arrangement to produce a ground material (p_{M});
- subsequently, a transferring and drying, thermal drying or freeze-drying (G) of the ground material (p_{M}) to a nanopowder (p_{MG}) occurs
and
- then a re-homogenizing (R) of the dried nanopowder (P_{MGR}) takes place,
wherein
- the at least one aliquot for pressing of the dried and re-homogenized nanopowder (p_{MG}) is selected,
- pressing takes place without addition of binder, and
- a nanopowder (p_{MG}) with grain size in the range of 30-150 nm is formed.

2. Compressed tablet/pellet producing method for nanoparticulate compressed tablets/pellets according to claim 1,
**characterised in that**
the pressing (P) of the aliquots (p_{MGR}) takes place in a high pressure press in the working range of 2 bis 80 t, 3 bis 40 t or 5 - 20 t.

3. Compressed tablet/pellet producing method for nanoparticulate compressed tablets/pellets according to claim 2,
**characterised in that**
the pressing (P) in the high pressure press occurs with polished sapphire, glass and/or diamond disks and by a pressing tool with form factors adapted to the area of application.

4. Compressed tablet/pellet producing method for nanoparticulate compressed tablets/pellets according to one of the preceding claims,
**characterised in that**
the wet grinding (M) is carried out with a liquid, wherein the liquid is water and/or an organic solvent.

5. Compressed tablets/pellets made with any of the foregoing pressed tablet/pellet manufacturing processes for nanoparticulate pressed tablets/pellets of synthetic and/or natural materials.

6. Use of the preceding compressed tablets/pellets produced with one of the preceding compressed tablet/pellet producing methods for nanoparticulate compressed tablets/pellets of synthetic and/or natural materials as a reference material for solid-state analysis or as a medium for direct solid-state analysis.

## Revendications

1. Procédé de fabrication de comprimés/pellets nanoparticulaires à partir de matériaux synthétiques et/ou naturels, comprenant les étapes suivantes:
- préparation d'une poudre finement broyée (p) avec une granulométrie <75 µm et
- pressage (P) d'au moins une aliquote de celle-ci dans une presse à haute pression en un comprimé / pellet (t),
où
entre les étapes susmentionnées:
- tout d'abord un broyage humide (M) de la poudre finement broyée pour analyse (p) dans un agencement de broyage, agencement de broyage Jet Mill et / ou un broyeur à boulets à haute énergie pour obtenir une matière à broyer (p_{M});
- en outre, un transfert et un séchage, un séchage thermique ou lyophilisation (G) de la matière à broyer (p_{M}) en une nanopoudre (p_{MG}).
et
- on procède ensuite à une réhomogénéisation (R) de la nanopoudre séchée (p_{MGR}),
où
- la au moins une aliquote pour la compression est sélectionnée à partir de la nanopoudre (p_{MGR}) séchée et réhomogénéisée,
- le pressage est effectué sans ajout d'un liant, et
- une nanopoudre (p_{MG}) avec des tailles de grains dans la plage de 30 à 150 nm est formée.

2. Procédé de fabrication de comprimés/pellets nanoparticulaires selon la revendication 1,
**caractérisé en ce que**
le pressage (P) de l'aliquote (p_{MGR}) est effectué dans une presse à haute pression dans la plage de travail de 2 à 80 t, 3 à 40 t ou 5 - 20 t.

3. Procédé de fabrication de comprimés/pellets nanoparticulaires selon la revendication 2,
**caractérisé en ce que**
le pressage (P) dans la presse à haute pression s'effectue avec des disques de saphir, de verre et/ou de diamant polis et des facteurs de forme adaptés au domaine d'utilisation par des outils de pressage.

4. Procédé de fabrication de comprimés/pellets nanoparticulaires selon l'une des revendications précédentes,
**caractérisé en ce que**
le broyage humide (M) est effectué avec un liquide, le liquide étant de l'eau et/ou un solvant organique.

5. Comprimés / pellets fabriqués par l'un des procédé de fabrication de comprimés/pellets nanoparticulaires en matériaux synthétiques et/ou naturels.

6. Utilisation des comprimés/pellets précédents fabriqués par l'un des procédé de fabrication de comprimés/pellets nanoparticulaires de matériaux synthétiques et/ou naturels comme matériau de référence pour des procédés d'analyse de solides ou comme support pour l'analyse directe de solides.
